# EUROPEAN PATENT APPLICATION

(11) **EP 4 425 255 A1**
(43) Date of publication of application: **04.09.2024**
(21) Application number: 24159100.7
(22) Date of filing: 22.02.2024
(51) Int. Cl.: G03B 21/16, G03B 21/20

(54) **HERMETICALLY SEALED COMPACT CLOSED LOOP COOLING SYSTEM FOR A LASER PHOSPHOR WHEEL**

(30) Priority: 01.03.2023 US 202318176553
(71) Applicant: Christie Digital Systems USA, Inc., Cypress, CA 90630 (US)
(72) Inventor: BHATIA, Dinesh, Toronto, M2N 0A3 (CA); SARRE, Scott, Cambridge, N3H 1H2 (CA); MAIGA, Sidi El Becaye, Kitchener, N2E 3R7 (CA)
(74) Representative: Zimmermann, Tankred Klaus

(57) **Abstract**

A system is provided for cooling a laser phosphor wheel, comprising a conduit surrounding the laser phosphor wheel and oriented to direct a flow of air tangential to rotation of the laser phosphor wheel for absorbing heat therefrom, and at least one heat pipe assembly passing through the conduit for extracting and dissipating heat absorbed by the flow of air.

## Description

### BACKGROUND OF THE INVENTION

### 1. Field of the Invention

The present invention is directed to a system for cooling a laser phosphor wheel, and more particularly to a hermetically sealed, compact, closed loop, aerodynamic cooling and mounting system for a laser phosphor wheel.

### 2. Description of the Related Art

A laser phosphor system consists of a rotating wheel with an annular strip of phosphor glued onto it using an adhesive. A lens focuses a laser spot on the phosphor which results in increased temperature that can deteriorate performance of the phosphor.

It is known to blow air perpendicular to the wheel for impingement cooling to maintain the temperature of the phosphor below a threshold value. In such systems, the air is recirculated in a closed system using a fan and is cooled using heat pipes. Existing designs typically require multiple fans due to high pressure losses because of the flow path design and need for high air flow rate to provide adequate cooling. The high flow rate and multiple fans lead to high noise levels as well as consuming significant space.

The following prior art is relevant to this specification: US7841721B2: Projector with a sealed structure having an air-circulation path; JP6261061B2: Cooling structure of illumination optical system and projection display device; WO2021116206A1: A laser reflection unit; US10303046: Projector with hermetic housing and air guide wall therein; US8845134B2: Cooling system for light emitting device and light emitting device using the same; US10845686: Phosphor wheel, and phosphor wheel device, light conversion unit, and projection display apparatus, each provided with phosphor wheel.

### SUMMARY OF THE INVENTION

It is an aspect of the present invention to provide a system for cooling a laser phosphor wheel that addresses the problem of high pressure loss and need of multiple fans.

In an embodiment, a cooling and mounting system is provided for a laser phosphor wheel system and optical elements which is compact and aerodynamic in shape. In one aspect, the cooling and mounting system ensures high efficiency cooling near the optical elements notwithstanding only a small gap between the laser phosphor wheel and the optical elements, as well as low power consumption which enables use of a single small sized fan, along with the optimized flow path for compactness.

In an aspect, the system for cooling the laser phosphor wheel comprises a conduit surrounding the laser phosphor wheel that is oriented to direct a flow of air tangential to rotation of the laser phosphor wheel for absorbing heat therefrom, and at least one heat pipe passing through the conduit for extracting and dissipating heat absorbed by the flow of air.

In another aspect, a lens seat is provided that allows for cooling of the gap between the wheel and the optical elements.

In another aspect, the system is hermetically sealed for closed loop cooling wherein air blown onto the laser phosphor wheel is recirculated back into the fan after cooling via one or more heat pipes.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 shows a system for cooling a laser phosphor wheel, according to an embodiment.
Figure 2 is a vertical cross section through the system of Figure 1.
Figure 3 is a plan view of the system shown in Figure 1.
Figure 4 is a horizontal cross section through the system of Figure 1.
Figure 5 is a rear view of the system shown in Figure 1.
Figure 6 is a sectional view of the system from the perspective of Figure 1.
Figure 7 shows a system for cooling a laser phosphor wheel, according to an alternative embodiment.
Figure 8 is a plan view of the system shown in Figure 7.
Figure 9 is a sectional view of a system for cooling a laser phosphor wheel, according to a further alternative embodiment.
Figure 10 shows a system for cooling a laser phosphor wheel, according to a yet another alternative embodiment.

### DETAILED DESCRIPTION OF THE PREFERRED EMBODIMENTS

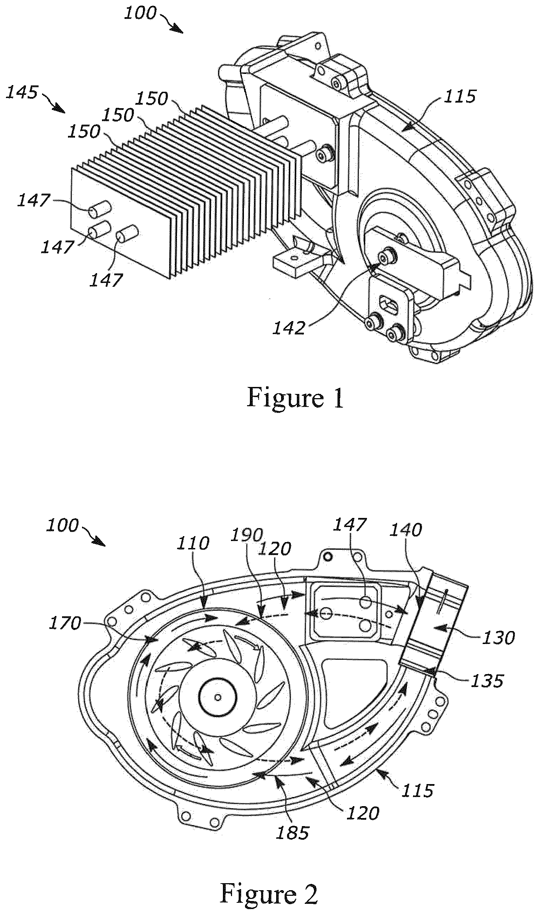

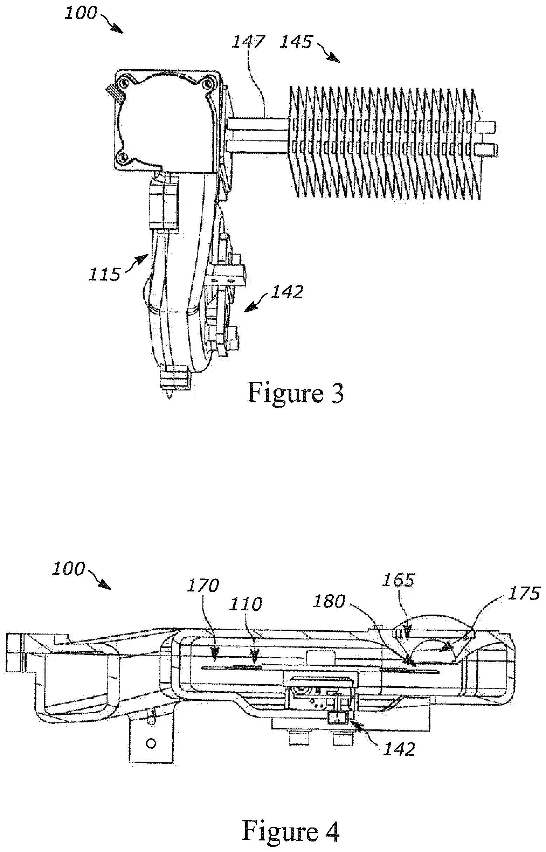

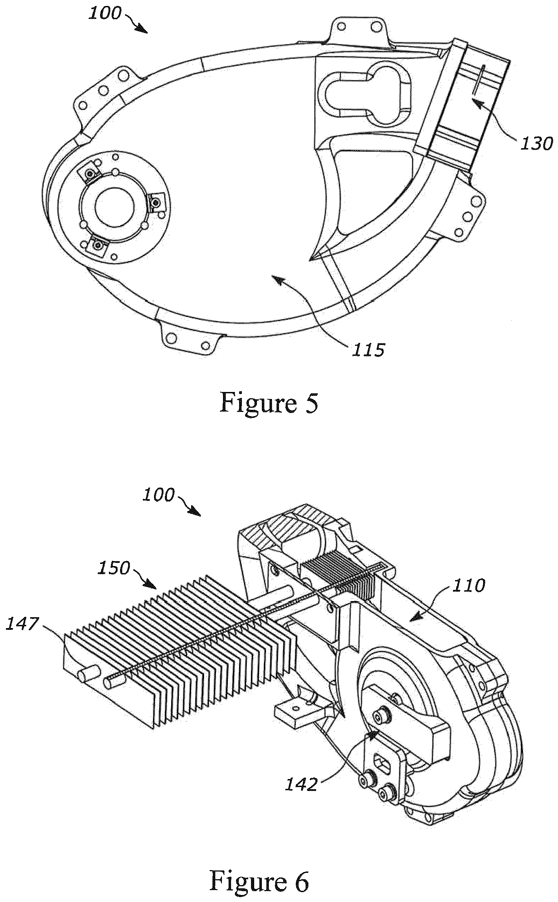

With reference to Figures 1 - 6, a system 100 is shown, according to an embodiment, for cooling and mounting a laser phosphor wheel 110, having a hermetically sealed enclosure 115 with an air path or conduit 120 surrounding the laser phosphor wheel 110. Conduit 120 is oriented to direct a flow of air from a recirculating fan 130 tangential to rotation of the laser phosphor wheel 110 for absorbing heat therefrom. Conduit 120 is connected to the fan 130 via supply and return channels 135 and 140. A motor 142 is mounted to the enclosure 115 for driving the fan 130.

At least one heat pipe assembly 145 is provided comprising at least one heat pipe 147 that passes through the conduit 120 for extracting heat absorbed from the phosphor wheel 110 by the flow of air, and dissipating the heat externally of the enclosure 115 via cooling fins 150 in the condenser section to improve heat transfer. An additional fan may also be deployed in the condenser section to further improve heat transfer. The enclosure air path around the phosphor wheel 110 follows the circular shape of the wheel so as to occupy minimal space and be aerodynamic in nature to lower pressure losses. The system 100 is hermetically sealed for closed loop cooling such that air blown onto the laser phosphor wheel 110 is recirculated back into the 130 fan after cooling via the one or more heat pipe 145 assemblies.

A lens seat 165 is provided for housing an optical lens 175 that directs light from a laser (not shown) onto an annular strip of phosphor 170 glued to the phosphor wheel 110, and allows for a jacket of air around the lens seat 165 to cool the small gap 180 between the wheel and the lens 175 and adjacent to the hotspot on the wheel where the laser is focused.

The flow direction from the recirculating fan 130 can be either along the direction of fan rotation (co-rotating) or against (contra-rotating), as shown by arrows 185 and 190, respectively.

In the co-rotating configuration (arrows 185), the air flows from supply channel 135 across the wheel 110 to return channel 140 so that the direction of flow impinging on the wheel is along the direction of rotation of the wheel.

In the contra-rotating configuration (arrows 190), the air flows from supply channel 140 across the wheel 110 to return channel 135 so that the direction of flow impinging on the wheel 110 is opposite to the direction of rotation of the wheel.

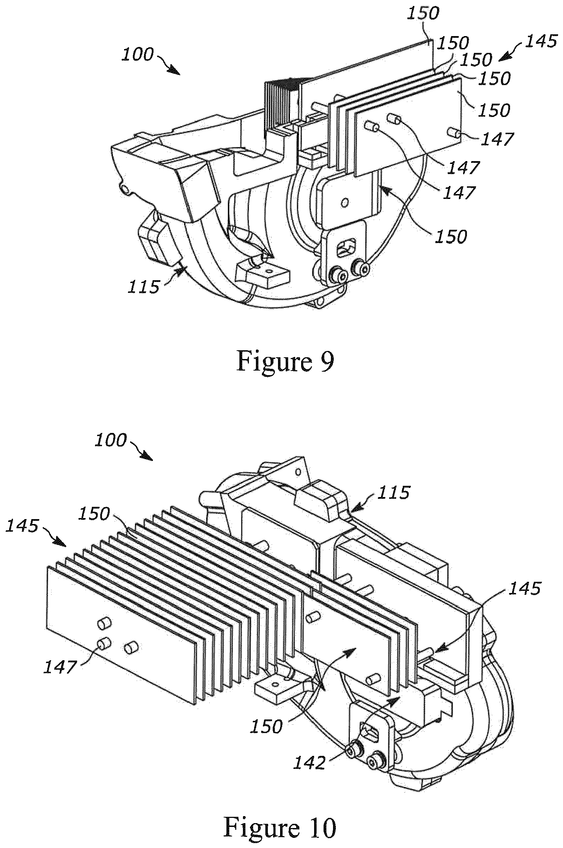

The one or more heat pipe assemblies 145 can be placed in the path of both or either of the supply and return channels 135, 140 or around the phosphor wheel 110 (Figure 9) depending on the heat pipe design and the cooling requirements.

In Figures 1 - 6, the heat pipes 147 are placed in the path of channel 140, which is the return channel for the co-rotating configuration (arrows 185) or supply channel for the contra-rotating configuration (arrows 190).

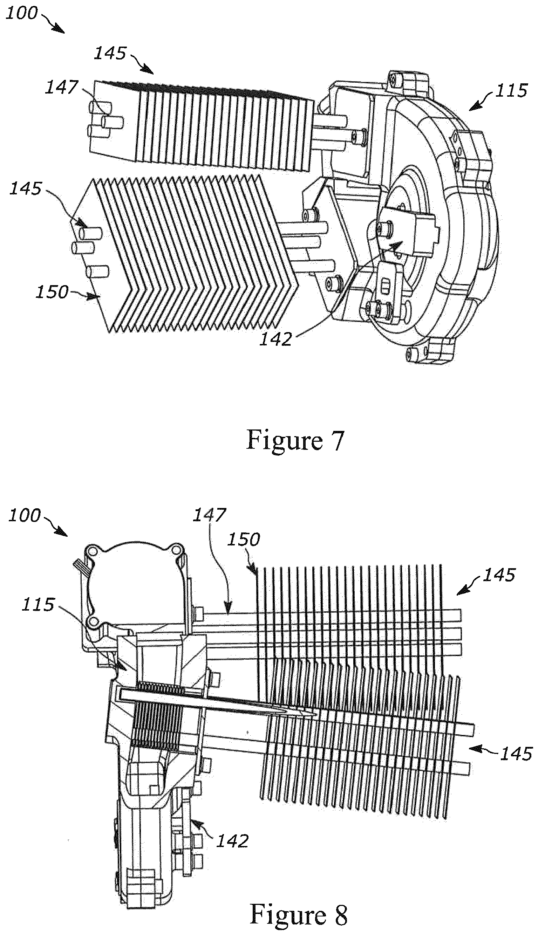

In Figures 7 and 8 heat pipe assemblies 145 are placed in the path of both of the supply and return channels 135, 140.

Figure 9 shows an embodiment of the system 100 wherein a heat pipe assembly145 is placed adjacent the laser phosphor wheel 110 with integral fins 150 stacked along the axis of the wheel on opposite sides with the heat pipes 147 oriented in a direction parallel to the axis of wheel rotation. The fin stacking ensures that the gap between the fins is along the air flow direction, resulting in a low pressure drop in that direction.

Figure 10 shows an embodiment that combines the features of the Figure 1 embodiment wherein the heat pipe assembly145 is placed in the path of channel 140, which is the return channel for the co-rotating configuration (arrows 185) or supply channel for the contra-rotating configuration (arrows 190) and the features of the Figure 9 embodiment wherein the heat pipe assembly 145 is placed adjacent the laser phosphor wheel 110 with integral fins 150 stacked along the axis of the wheel on opposite sides.

The various embodiments described above and shown in Figures 1-10 address the problem of high pressure loss and need of multiple fans in a laser phosphor system. The described embodiments also address compactness of the enclosure 115 in the direction of the axis of laser phosphor wheel 110. The modularity of system 100 can accommodate usage in various types of projector systems without requiring integration of the optical and cooling system in a single enclosure.

As shown in the drawings, one or more heat pipe assemblies 145 may be provided, each having one or more heat pipes 147 and a plurality of fins 150. Thus, although the illustrated embodiments show heat pipe assemblies 145 each having three heat pipes 147, it is contemplated that each heat pipe assembly 145 can include a single heat pipe a47, two heat pipes 147 or more than three heat pipes 147. Also, although, Figures 1 - 6 and 9 show embodiments with a single heat pipe assembly 145 and Figures 7, 8 and 10 show embodiments with two heat pipe assemblies 145, it is contemplated that various configurations of heat pipe assemblies 145 placed in the supply and/or return channels 135, 140 and/or adjacent the laser phosphor wheel 110, such as a single heat pipe assembly 145 in the return channel (Figures 1 - 6), a single heat pipe assembly 145 in the supply channel, a single heat pipe assembly 145 adjacent the laser phosphor wheel 110 (Figure 9), two heat pipe assemblies 145 in the supply and return channels (Figures 7 and 8), two heat pipe assemblies 145 in the supply channel and adjacent the laser phosphor wheel 110, two heat pipe assemblies 145 in the return channel and adjacent the laser phosphor wheel 110, and three heat pipe assemblies 145 in the return channel, supply channel and adjacent the laser phosphor wheel 110 (Figure 10).

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A system for cooling a laser phosphor wheel, comprising:
a conduit surrounding the laser phosphor wheel and oriented to direct a flow of air tangential to rotation of the laser phosphor wheel for absorbing heat therefrom; and
at least one heat pipe assembly for extracting and dissipating heat absorbed by the flow of air.

2. The system according to claim 1, further including an enclosure for hermetically sealing the conduit and at least one heat pipe .

3. The system according to claim 1, further including a recirculating fan for directing the flow of air through the conduit and back to the fan.

4. The system according to claim 3, wherein the fan directs the flow of air along the direction of fan rotation.

5. The system according to claim 3, wherein the fan directs the flow of air against the direction of fan rotation.

6. The system according to claim 1, wherein the at least one heat assembly comprises at least one heat pipe and a plurality of cooling fins for transferring heat from the at least one heat pipe.

7. The system according to claim 2, wherein the enclosure conforms to a circular shape of the laser phosphor wheel.

8. The system according to claim 2, wherein the enclosure includes a lens seat for housing an optical lens to direct light onto an annular strip of phosphor on the laser phosphor wheel, wherein the lens seat is shaped to provide a jacket of air for cooling a small gap between the laser phosphor wheel and lens that is adjacent a hotspot where the light is focused on the annular strip of phosphor.

9. The system according to claim 1, wherein the at least one heat pipe assembly is positioned in the flow of air.

10. The system according to claim 9, wherein the at least one heat pipe assembly is positioned proximate a supply channel of the recirculation fan.

11. The system according to claim 9, wherein the at least one heat pipe assembly is positioned proximate a return channel of the recirculation fan.

12. The system according to claim 11, including a further at least one heat pipe assembly positioned proximate a supply channel of the recirculation fan.

13. The system according to claim 9, wherein the at least one heat pipe assembly is positioned adjacent the laser phosphor wheel with integral cooling fins perpendicular to the axis of rotation and parallel to the plane of rotation of the laser phosphor wheel on opposite sides with the at least one heat pipe and oriented in a direction parallel to the axis of rotation.

14. The system according to claim 1, including a further at least one heat pipe assembly positioned adjacent the laser phosphor wheel with integral cooling fins perpendicular to the axis of rotation and parallel to the plane of rotation of the laser phosphor wheel on opposite sides with the at least one heat pipe and oriented in a direction parallel to the axis of rotation.
